# EUROPÄISCHE PATENTSCHRIFT

(11) **EP 1 719 345 B1**
(45) Veröffentlichungstag und Bekanntmachung des Hinweises auf die Patenterteilung: **29.02.2012**
(21) Anmeldenummer: 05707819.8
(22) Anmeldetag: 21.01.2005
(51) Int. Cl.: H04N 7/24

(54) **VERFAHREN UND VORRICHTUNG ZUR CODIERUNG UND DECODIERUNG VON STRUKTURIERTEN DOKUMENTEN**
METHOD AND DEVICE FOR CODING AND DECODING STRUCTURED DOCUMENTS
PROCEDE ET DISPOSITIF POUR CODER ET DECODER DES DOCUMENTS STRUCTURES

(30) Priorität: 27.02.2004 DE 102004009617
(43) Veröffentlichungstag der Anmeldung: 08.11.2006
(73) Patentinhaber: SIEMENS AKTIENGESELLSCHAFT, 80333 München (DE)
(72) Erfinder: HEUER, Jörg, 82041 Oberhaching (DE); HUTTER, Andreas, 81673 München (DE); PEINTNER, Daniel, 81739 München (DE)
(86) Internationale Anmeldenummer: PCT/EP2005/050264
(87) Internationale Veröffentlichungsnummer: WO 2005/084029

(56) Entgegenhaltungen:
- WO-A-02/063775
- WO-A-03/001811
- "Results of CE on Specification consistency - Item c - Schema Transmission Framework" ISO/IEC JTC1/SC29/WG11 MPEG03/9889, Juli 2003 (2003-07), XP002330762 TRONDHEIM
- "CE-4 bis: Proposal for a Schema Transmission Framework" ISO/IEC JTC1/SC29/WG11 MPEG2002/M9264, Dezember 2002 (2002-12), XP002330763 AWAJI ISLAND, JAPAN
- "TEXT OF ISO/IEC 15938-1/PDAM1" ISO/IEC JTC1/SC29/WG11 MPEG/N5486, Dezember 2002 (2002-12), Seiten A-B,IV, XP001131062
- "TEXT OF ISO/IEC FCD 15938-1 INFORMATION TECHNOLOGY - MULTIMEDIA CONTENT DESCRIPTION INTERFACE - PART 1 SYSTEMS" ISO/IEC JTC1/SC29/WG11 MPEG01/N4001, März 2001 (2001-03), Seiten 1-2,I, XP001001465

## Beschreibung

Die Erfindung betrifft ein Verfahren und eine Vorrichtung zur Codierung und Decodierung von strukturierten Dokumenten gemäß dem Oberbegriff des Anspruchs 1.

XML (= extensible markup language) ist eine Sprache, mit der eine strukturierte Beschreibung der Inhalte eines Dokuments mittels XML-Schema-Sprachdefinitionen ermöglicht wird. Eine genauere Beschreibung des XML-Schemas sowie der darin verwendeten Strukturen, Datentypen und Inhaltsmodelle findet sich in den Referenzen
- http://www.w3.org/TR/2001/REC-xmlschema-0-20010502/,
- http://www.w3.org/TR/2001/REC-xmlschema-1-20010502/,
- http://www.w3.org/TR/2001/REC-xmlschema-2-20010502/.

Aus Schriften zum MPEG-7-Standard, insbesondere ISO/IEC 15938-1 "Multimedia Content Description Interface -Part 1: Systems", Geneva 2002, sind Verfahren, Vorrichtungen oder Systeme zur Codierung bzw. Decodierung von XML-basierten Dokument bekannt.

Erweiterungen zu dem Verfahren, Vorrichtungen oder Systeme zur Codierung bzw. Decodierung von XML-basierten Dokument sind aus Schriften zum MPEG-7-Standard, sind aus der deutschen Anmeldung mit dem amtlichen Aktenzeichen 10351897.5 bekannt. Darin ist ein Verfahren zur Codierung eines strukturierten Dokuments, insbesondere eines XML-basierten Dokuments offenbart, bei dem eine Vielzahl von Codes mittels eines oder mehrerer Schemas und/oder Namensräume erzeugt werden, wobei für ein Schema und/oder einen Namensraum und/oder für eine Gruppe von Schemas und/oder Namensräumen jeweils separate, von anderen Schemas und/oder Namensräumen unabhängige Codes für die mittels in den Schemas und/oder Namensräumen und/oder in den Gruppen von Schemas und/oder Namensräumen definierten und/oder deklarierten Elemente vergeben werden.

Diese ermöglichen eine effiziente Codierung auch dann, wenn Schemas dem Encoder und/oder Decoder nicht vollständig bekannt sind. Dies wird erreicht, indem Codetabellen für die Datentypen, die globalen Elemente und die Ersetzungsgruppen nach Namensräumen getrennt werden, wobei unter einem Namensraum dabei ein Raum zu verstehen ist, in dem darin verwendeten Namen von Datentypen (Typnamen) mit eindeutigen Bedeutungen belegt und definiert sind.

Bekannte Verfahren zur binären Repräsentation von MPEG-7 und anderen XML-basierten Beschreibungen oder Dokumenten weisen Defizite hinsichtlich En- und Decodierungskomplexität auf, sofern die zu codierende XML Beschreibung oder das XML Dokument auf mehreren Namensräumen beruht. Beispielsweise wird in den oben genannten Schriften ein Verfahren zur binären Repräsentation von XML-Beschreibungen und XML-Dokumenten beschrieben, das Codetabellen für XML-Beschreibungen und XML-Dokumente basierend auf Schemas und Namensräumen bestimmt (Im Folgenden wird der Ausdruck "Namensraum" synonym für den Ausdruck "Schema" verwendet).

Gemäß der bekannten Verfahrensweise können dabei Datentypen von anderen Datentypen vererbt sein. Diese Vererbungsbeziehung erlaubt, in einem XML Dokument anstatt einer Instanz des Basistyps eine Instanz eines vererbten Typs zu verwenden.

Der Typecode signalisiert ausgehend vom Basistyp welchen Typs eine Instanz ist. Ausgehend von einem Basistypen in einem ersten Namensraum muss zur Bestimmung der adressierbaren Typnamen in einem zweiten Namensraum bei En- und/oder Decodierung die Vererbungsstruktur über mehrer Namensräume analysiert werden. Hierzu wird ein Vererbungsbaum aufgebaut, wie er in der ISO/IEC 15938-1 "Multimedia Content Description Interface -Part 1: Systems", Geneva 2002, beschrieben ist.

Dies setzt voraus, dass alle Namensräume bekannt sind und der gesamte Vererbungsbaum im Speicher aufgebaut werden kann. Der gesamte Vererbungsbaum besteht aus den Kennzeichnern der benannten Typen aller für die Instanziierung einer XML Beschreibung und/oder XML Dokuments referenzierten Namensräume und deren Vererbungsbeziehung. Das beschriebene Verfahren ist daher sehr aufwendig.

Ein Dokument "Results of CE on Specification consistency - Item c - Schema Transmission Framework", ISO/IEC JTC1/SC29/WG11 MPEG03/9889, Juli 2003(2003-07), XP002330762 TRONDHEIM präsentiert Ergebnisse einer Untersuchung zum Arbeitspaket Schemaübertragung im Umfeld der Standardisierung ISO/IEC JTC1/SC29/WG11.

Ein Dokument Maggie et al., "CE-4 bis: Proposal for a Schema Transmission Framework", ISO/IEC JTC1/SC29/WG11 MPEG2002/M9264, Dezember 2002 (2002-12), XP002330763 AWAJI ISLAND, JAPAN umfasst eine Spezifikation für ein Arbeitspaket Schemaübertragung im Rahmen einer Standardisierung ISO/IEC JTC1/SC29/WG11.

Die der Erfindung zugrundeliegende Aufgabe besteht nun darin, ein gegenüber dem aus dem Stand der Technik vereinfachtes Verfahren und eine Vorrichtung zur Codierung und Decodierung von strukturierten Dokumenten anzugeben.

Diese Aufgabe wird ausgehend von dem Verfahren zur Codierung gemäß den Merkmalen des Oberbegriffs des Anspruchs 1, sowie ausgehend von der Codiervorrichtung gemäß Anspruch 13, jeweils durch deren kennzeichnenden Merkmale gelöst.

Bei dem erfindungsgemäßen Verfahren zur Codierung eines strukturierten, insbesondere XML-basierten Dokuments, bei dem eine Vielzahl von Codes mittels eines oder mehrerer Namensräume erzeugt und für mittels Namensräumen definierten Typen vergeben werden, wird eine Teilmenge adressierbarer Typen eines der Namensräume auf Grundlage von Vererbungsbeziehungen zwischen den Namensräumen sowie der Namensräume der Basistypen der Teilmenge ermittelt.

Das Verfahren zeichnet sich dadurch vorteilhaft aus, dass lediglich ein geringer Teil der insgesamt vorhanden Namensräume zur Identifizierung der adressierbaren Teilmenge gespeichert bzw. geladen werden muss. Daher ist eine enorme Entlastung von Ressourcen die Folge und zudem wird das Codieren beschleunigt.

Es wird bei dem Verfahren zur Codierung eines strukturierten, insbesondere XML-basierten, Dokuments zu jedem Namensraum eine Zuordnung zu weiteren Namensräumen derart gebildet wird, dass zumindest eine Zuordnungsinformation dergestalt erzeugt, dass zumindest eine Vererbungsbeziehung zwischen einem erbenden Namensraum und vererbenden Namensräumen beschrieben ist. Hierbei wird ein Namensraum, der Typen enthält, die direkt von einem Basistypen aus einem anderen Namensraum vererbt sind, erbender Namensraum genannt und ein Namensraum, der Basistypen enthält, die in einen anderen Namensraum vererbt worden sind, vererbender Namensraum.

Die durch diese Weiterbildung bereitgestellten Zuordnungsinformationen ermöglichen eine strukturierte Organisation von Vererbungsinformationen, so dass lediglich ein Teil des gesamten Vererbungsbaums für die Identifizierung der Teilmenge von Nöten ist. Diese Weiterbildung führt somit zu einer weiteren Ressourceneinsparung/-entlastung und Beschleunigung.

Es wird die Zuordnungsinformation des erbenden Namensraums aus einer Liste von Codes der Basistypen von Kopftypen des erbenden Namensraums, gebildet, wobei Kopftypen Typen sind, die direkt von einem Basistyp des vererbenden Namensraums abstammen und wobei die Basistypen auch durch Kopftypen gebildet werden, denen weitere Kopftypen entstammen.

Bevorzugt wird die adressierbare Teilmenge ausgehend von einem Startbasistyp der Basistypen des vererbenden Namensraums ermittelt, wobei zur Identifizierung der Teilmenge in der Regel ausgehend von dem Startbasistyp zur Ermittlung der Teilmenge Kopftypen im erbenden Namensraum durch die Zuordnungsinformation identifiziert werden, die von einem Basistypen aus dem vererbenden Namensraum abstammen, bei denen der Startbasistyp ein Basistyp in dem vererbenden Namensraum ist.

Alternativ oder ergänzend wird bei dem Verfahren zur Codierung eines strukturierten, insbesondere XML-basierten, Dokuments zu mindestens einem Namensraum die den erbenden Namensräumen zugeordnete Zuordnungsinformation gemeinsam mit dem jeweiligen Namensraum in einem die Codierung und/oder Decodierung vornehmenden ersten Gerät gespeichert wird.

Bei einer Weiterbildung wird die den erbenden Namensräumen zugeordnete Zuordnungsinformation in einem zweiten Gerät erzeugt und gemeinsam dem jeweiligen Namensraum in einem die Codierung und/oder Decodierung vornehmenden ersten Gerät übermittelt.

Das hier beschriebene Verfahren ist vorteilhaft, da nun zur Bestimmung der adressierbaren Datentypen nur der Namensraum des Basistypen, der Namensraum des zu adressierenden Datentyps und die Vererbungsbeziehung BT bekannt sein und/oder geladen werden muss.

Ein wesentlicher Vorteil des erfindungsgemäßen Verfahrens ist eine effiziente Bestimmung der adressierbaren Typnamen zu ermöglichen, ohne den gesamten Vererbungsbaum aufbauen zu müssen. Zudem kann dies auch ohne Kenntnis aller Schemas oder Namensräume erfolgen.

Ein weiterer Vorteil besteht darin, dass die Suche nach dem adressierten Datentyp mit weniger Vergleichoperationen realisiert werden kann verglichen mit der Suche im gesamten Vererbungsbaum.

In einer Ausführungsform besteht die Vererbungsinformation BT eines Namensraums NS aus einer Liste an Typcodes TC^{LBT} der Basistypen LBT je Kopftypen HT des Namensraums NS.

In einer weiteren Ausführungsform hierzu werden die Typecodes nach folgendem Verfahren vergeben:

Zur Codierung eines strukturierten Dokuments werden eine Vielzahl von Codes mittels eines oder mehrerer Schemas und/oder Namensräume erzeugt. Dabei werden für ein Schema und/oder einen Namensraum und/oder für eine Gruppe von Schemas und/oder Namensräumen jeweils separate, von anderen Schemas und/oder Namensräumen unabhängige Codes für die mittels in den Schemas und/oder Namensräumen und/oder in den Gruppen von Schemas und/oder Namensräumen definierten und/oder deklarierten Elemente vergeben.

Bei Weiterbildung hiervon werden Codes in Schemas und/oder Namensräumen separiert vergeben. Das hier beschriebene Verfahren ist vorteilhaft, da nun Schemas und/oder Namensräume nach Bedarf auch während der Übertragung von Dokumenten geladen werden können und existierende Codetabellen für andere Namensräume sich hierdurch nicht ändern und somit nicht neu erstellt werden müssen. Ein weiterer Vorteil besteht darin, dass die separaten Codes für Fälle, in denen sehr viele Namensräume importiert werden, weniger Bits zur Adressierung benötigen, als wenn wie in ISO/IEC 15938-1 "Multimedia Content Description Interface -Part 1: Systems", Geneva 2002, alle Namensräume zusammengefasst werden. Auch in Fällen, in denen ein sehr großer Namensraum importiert wird, können die separaten Codes für die anderen Namensräume mit weniger Bits codiert werden.

In einer bevorzugten Variante der Erfindung sind die separaten Codes in Adressbereiche eingeteilt, wobei über die Adressbereiche das Schema und/oder der Namensraum bzw. die Gruppe von Schemas und/oder Namensräumen identifizierbar wird.

In einer bevorzugten Ausführungsform des erfindungsgemäßen Codierverfahrens umfassen die separaten Codes jeweils einen lokalen Code bezüglich des Schemas und/oder des Namensraums und/oder bezüglich der Gruppe von Schemas und/oder Namensräumen und einen Identifikationscode, der das Schema und/oder den Namensraum und/oder die Gruppe von Schemas und/oder Namensräumen identifiziert. Ein lokaler Code ist hierbei ein Code, der eindeutig innerhalb des durch den Identifikationscode identifizierten Schemas bzw. Namensraums ist.

Vorzugsweise werden separate Codes für globale Elemente und/oder SubstitutionGroups und/oder Datentypen vergeben. Eine genaue Definition für globale Elemente, SubstitutionGroups und Datentypen findet sich in den XML-Schema-Definitionen, die in den Dokumenten - http://www.w3.org/TR/2001/REC-xmlschema-0-20010502/ , http://www.w3.org/TR/2001/REC-xmlschema-1-20010502/ und http://www.w3.org/TR/2001/REC-xmlschema-2-20010502/, genau erläutert sind.

Für Datentypen TypeCodes, die in dem Dokument ISO/IEC 15938-1 "Multimedia Content Description Interface -Part 1: Systems", Geneva 2002, erläutert sind, werden separate Codes in einer bevorzugten Ausführungsform derart erzeugt, dass innerhalb des Vererbungsbaums eines Namensraums der zu einem ersten Datentyp in demselben Namensraum benachbarten Datentyp einen Codeabstand zu dem ersten Datentyp hat, welcher der Anzahl der in diesem Namensraum von dem ersten Datentyp abgeleiteten Datentypen entspricht. Ein Datentyp ist zu einem ersten Datentyp benachbart, wenn der Datentyp vom gleichen Basisdatentyp wie der erste Datentyp abgeleitet worden ist und dem Datentyp unter allen Datentypen, die von diesem Basisdatentypen abgeleitet worden sind, der kleinste TypeCode zugewiesen wurde, der größer als der TypeCode des ersten Datentyps ist. Bei dieser Ausführungsform werden die Codes für die Datentypen TypeCodes innerhalb des - möglicherweise disjunkten - Vererbungsbaums so vergeben, dass eine vorteilhafte Nachbarschaftsbeziehung in einem gegebenen Namensraum entsteht und erhalten bleibt, auch wenn in diesem Namensraum Unterbäume mit aus anderen Namensräumen abgeleiteten Typen vorkommen. In einer besonders bevorzugten Ausführungsform des erfindungsgemäßen Verfahrens werden die separaten Codes innerhalb eines gegebenen Namensraums gemäß einem Verfahren vergeben, das folgende Schritte umfasst:
- in einem ersten Schritt werden alle Datentypen eines Namensraums, die von Datentypen anderer Namensräume vererbt worden sind, in der im MPEG-7 Standard definierten Reihenfolge der globalen TypeCodes der jeweiligen Basisdatentypen in einer Liste sortiert, wobei die Basisdatentypen die Datentypen in anderen Namensräumen sind, von denen die sortierten Datentypen vererbt worden sind;
- in einem zweiten Schritt werden jeweils diejenigen Datentypen eines Namensraums, die von einem bestimmten Basisdatentypen eines bestimmten anderen Namensraums vererbt worden sind, lexikographisch sortiert;
- in einem dritten Schritt werden alle Datentypen eines Namensraums, die nicht von einem Datentypen eines anderen Namensraums vererbt worden sind, entsprechend der im MPEG-7 Standard definierten Reihenfolge in die bestehende Liste von Datentypen einsortiert;
- in einem vierten Schritt werden die separaten Codes in der Reihenfolge der Liste an die Datentypen des Namensraums vergeben.

Der Vorteil dieser Ausführungsform ist, dass der adressierte Datentyp, insbesondere ein TypeCode, schnell gefunden und somit decodiert werden kann. Nach den Regeln in ISO/IEC 15938-1 "Multimedia Content Description Interface -Part 1: Systems", Geneva 2002, adressiert ein TypeCode einen abgeleiteten Typ relativ zu einem Basistypen. Also definiert der Basistyp einen Unterbaum, in dem alle adressierbaren Datentypen vorhanden sind. Sind in dem Unterbaum nun mehrere Namensräume enthalten, so kann durch die vorteilhafte Nachbarschaftsbeziehung, die durch die obige Ausführungsform der Erfindung erreicht wird, in dem Namensraum ein adressierter Datentyp schnell gefunden werden, da durch einen Vergleich eines gesuchten Datentyps mit zwei benachbarten Datentypen im sortierten Vererbungsbaum festgestellt werden kann, ob sich der gesuchte Datentyp im Unterbaum des Datentypen der zwei benachbarten Datentypen mit dem kleineren binären Code befindet. Auf diese Weise kann der Suchaufwand erheblich verringert werden. Ein weiterer Vorteil dieser Nachbarschaftsbeziehung besteht darin, dass ein Decoder bei einer Codierung der TypeCodes gemäß ISO/IEC 15938-1 "Multimedia Content Description Interface -Part 1: Systems", Geneva 2002, die Codewortlänge, die sich aus der Anzahl der abgeleiteten Datentypen bestimmt, direkt aus dem Codeabstand der benachbarten Datentypen berechnen kann.

In einer weiteren Ausführungsform werden die lokalen Typcodes nach dem oben beschriebenen Verfahren vergeben, wobei in einer Weiterbildung hiervon, der Typecode TC^{LBT} aus NamensraumID und lokalem Typcode nach dem in oben beschriebenen Verfahren gebildet wird.

In einer weiteren Ausführungsform werden die lokalen Typcodes nach dem oben beschriebenen Verfahren vergeben und nur Basistypen des ersten Namensraums betrachtet, deren lokaler Typcode
a) größer als der lokale Typcode des Startbasistyps OBT ist und
b) kleiner als der kleinste, nächstgrößere lokale Typcode eines zum Starbasistypen OBT benachbarten Typen ist.

In einer bevorzugten Ausführungsform des erfindungsgemäßen Verfahrens werden die Vererbungsbeziehungen BT zwischen Namensräumen mit einem Schema und/oder Namensraum gespeichert und/oder übertragen.

Ferner wird ein Decodierverfahren beschrieben, mit dem ein strukturiertes Dokument, insbesondere ein XMLbasiertes Dokument decodiert wird, wobei das Verfahren derart ausgestaltet ist, dass ein mit dem erfindungsgemäßen Codierverfahren codiertes Dokument decodiert wird.

In einer bevorzugten Ausgestaltung des Decodierverfahrens wird hierbei zur Decodierung eines binären TypeCodes - dessen Erzeugung oben beschrieben ist - die Codelänge des separaten Codes für den binären TypeCode aus der Anzahl der abgeleiteten Daten bestimmt. Vorzugsweise wird ferner in einer bevorzugten Ausführungsform zur Decodierung eines bestimmten TypeCodes des Subbaums des Vererbungsbaums des Namensraums, in dem sich der bestimmte TypeCode befindet, anhand der Codeabstände zwischen benachbarten Datentypen ermittelt.

Bei einer Weiterbildung wird zur Bestimmung der Basistypen die von einem Startbasistypen entstammen, anhand der Codeabstände zwischen benachbarten Datentypen ermittelt.

Eine weitere Alternative oder Ergänzung ist gegeben, wenn bei dem zur Bestimmung der Anzahl an Typen in der Teilmenge ausgehend von den Kopftypen anhand der Codeabstände zwischen benachbarten Kopftypen ermittelt wird.

Neben den oben beschriebenen Verfahren betrifft die Erfindung eine Codiervorrichtung, mit der das erfindungsgemäße Codierverfahren durchführbar ist.

Ausführungsbeispiele der Erfindung werden nachfolgend anhand der beigefügten Zeichnungen näher erläutert.

Es zeigen:
- Figur 1: eine Prinzipdarstellung eines Codier- und Decodiersystems in welchem das erfindungsgemäße Verfahren zum Tragen kommt .
- Figur 2: eine Darstellung einer beispielhaften XML-Schema-Definition, in der auch Datentypen aus anderen Namensräumen importiert sowie abgeleitet werden.
- Figur 3: eine Darstellung eines Vererbungsbaums von Datentypen, einschließlich der Zuordnung der lokalen Codes zu in den Namensräumen auftretenden Typen.
- Figur 4: eine Darstellung eines Vererbungsbaums von Datentypen, der sich über mehrer Namensräume erstreckt.
- Figur 5: eine Darstellung eines Vererbungsbaums inklusive Vererbungsinformationen zwischen Namensräumen.

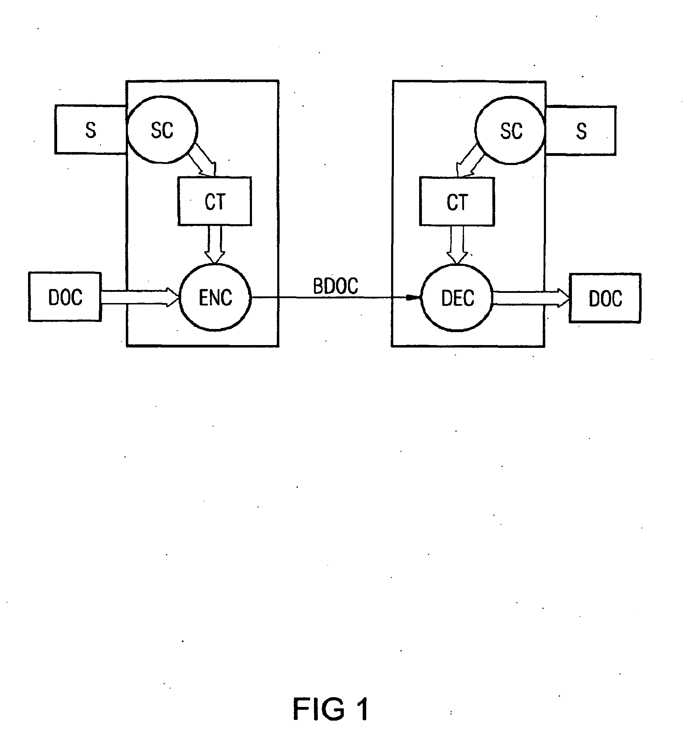

In Figur 1 ist beispielhaft ein Codier- und Decodiersystem, in dem das erfindungsgemäße Verfahren zum Einsatz kommt, mit einem Encoder ENC und einem Decoder DEC dargestellt, mit denen XML-Dokumente DOC codiert bzw. decodiert werden. Sowohl der Encoder als auch der Decoder verfügen beide über ein sogenanntes XML-Schema S, in dem die zur Kommunikation genutzten Elemente und Typen des XML-Dokuments deklariert und definiert sind. Aus dem Schema S werden über entsprechende Schema-Compilationen SC im Encoder und Decoder Code-Tabellen CT erzeugt. Wenn das XML-Dokument DOC codiert wird, werden den Inhalten des XML-Dokuments über die Code-Tabellen binäre Codes zugeordnet. Hierdurch wird eine Binärdarstellung BDOC des Dokuments DOC erzeugt, die mithilfe der Code-Tabelle CT im Decoder wieder decodiert werden kann. Es können hierbei mehrere Schemas verwendet werden, insbesondere können auch Schemas eingesetzt werden, welche auf einem Basisschema beruhen und aus einem weiteren Schema abgeleitet werden.

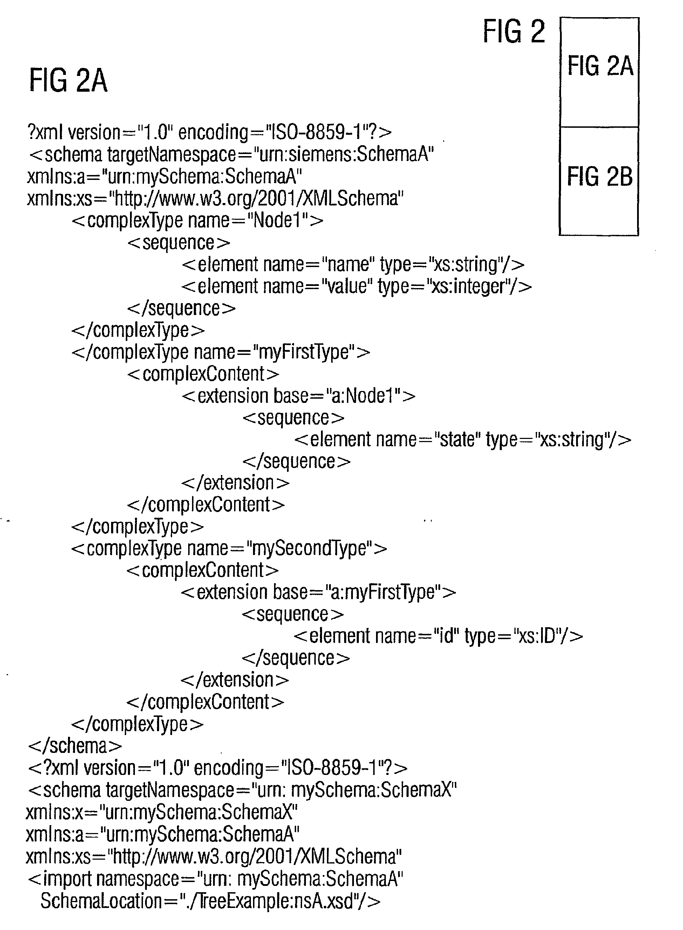

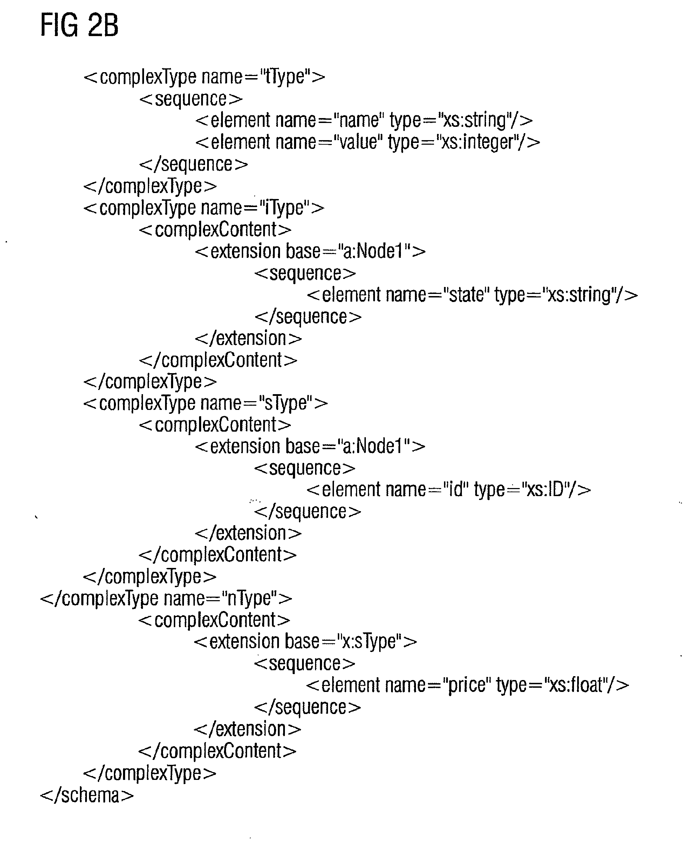

In Figur 2 ist beispielhaft ein Auszug aus einer XML-Schema-Definition gezeigt. Dem Fachmann sind solche XML-Schema-Definitionen bekannt, so dass auf den genauen Inhalt des Auszugs der Figur 2 nicht eingegangen wird. Der Auszug enthält zwei Schemadefinitionen, zum einen wird im oberen Teil ein Schema A definiert, wie durch eine geschweifte Klammer angedeutet ist, zum anderen wird im unteren Teil ein Schema X definiert, wie ebenfalls durch eine geschweifte Klammer angedeutet wird. Das Schema X verwendet wiederum Datentypen, die aus dem Schema A importiert worden sind.

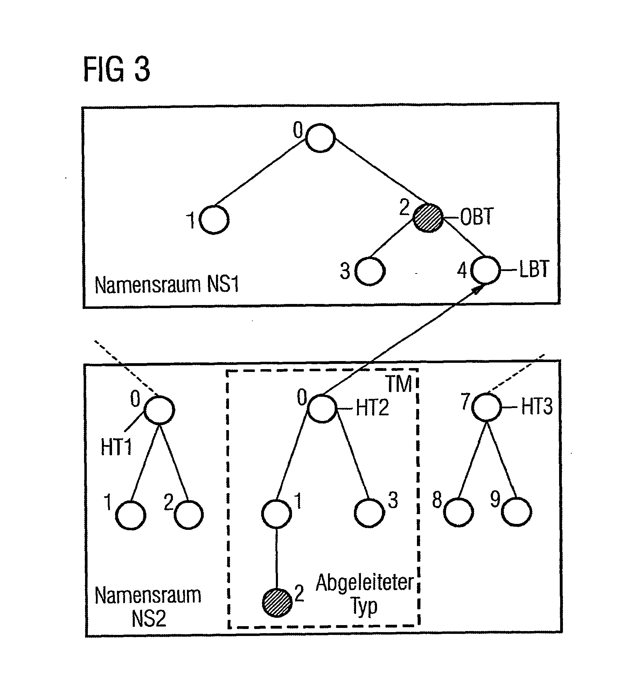

In Figur 3 sind die Vererbungsbeziehungen zwischen einem ersten Namensraum NS1 und einem zweiten Namensraum NS2 und deren Datentypen in der Form eines Ausschnitts einer Baumstruktur grafisch dargestellt. Wie der Figur anhand des rückwärts gerichteten nichtgestrichelten Pfeils entnommen werden kann, besteht eine Vererbungsbeziehung zwischen dem zweiten Namensraum NS2 und dem ersten Namensraum NS1. Jeder Knoten in dem Vererbungsbaum repräsentiert einen definierten, benannten Datentyp in der Schemadefinition. Mit dem in der deutschen Anmeldung mit dem amtlichen Aktenzeichen 10351897.5 beschriebennen Verfahren werden für die Namensräume NS1..NS2 jeweils lokale Codes vergeben, die in Figur 3 durch die Zahlen links neben den Knoten spezifiziert sind. Diese sogenannten lokalen Typecodes adressieren alle Typen in einem Namensraum eindeutig. Bei der erfindungsgemäßen Signalisierung eines Datentyps ausgehend von einem Startbasistyp OBT im ersten Namensraum NS1 ist die Menge der adressierbaren Typen im zweiten Namensraum NS2 eine - durch die gestrichelte Umrandung angedeutete - Teilmenge TM aller Typen in dem Namensraum NS2. Dementsprechend werden nur wenige Typcodes verwendet, die in Figur 3 durch die Zahlen rechts neben den Knoten spezifiziert sind und die gegebenenfalls nur eine kürzere binärer Repräsentation erfordern.

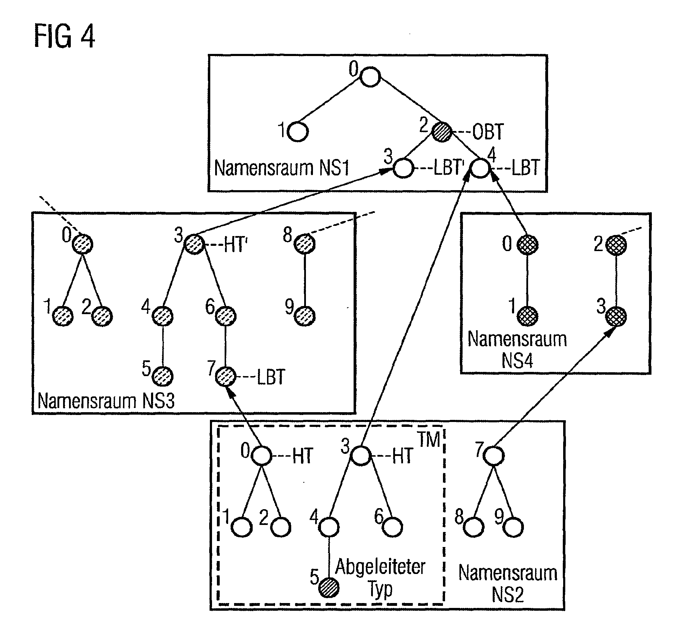

In Figur 4 sind vier Namensräume NS1..NS4 dargestellt, zwischen denen auch indirekte Vererbungsbeziehungen existieren; d.h. Vererbungsbeziehungen, bei denen zwischen einem abgeleiteten Typ und einem Basistyp mindestens ein weiterer Namensraum der Namensräume NS1..NS4 liegt.

Erfindungsgemäß lässt sich nun ausgehend von dem hervorgehoben dargestellten Startbasistyp OBT im ersten Namensraum NS1 eine - in der Darstellung durch die gestrichelte Umrandung hervorgehobene- Menge TM von adressierbaren Typen durch Betrachtung von Vererbungsbeziehungen aller Namensräume NS1..NS4 bestimmen.

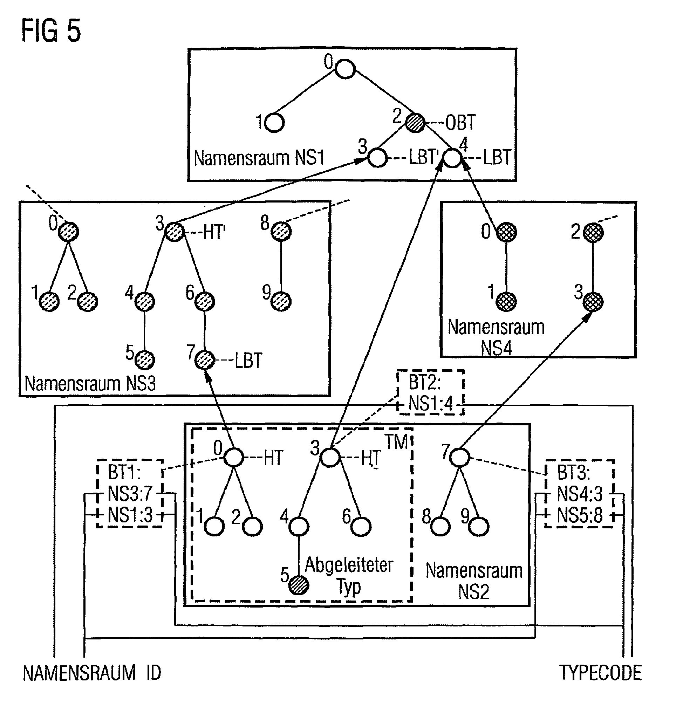

In Figur 5 sind für den vierten Namensraum NS4 die gemäß einer Variante des erfindungsgemäßen Verfahrens strukturierten Vererbungsinformationen BT1..BT3 dargestellt.

Zu erkennen ist dabei, dass die Strukturierung derart herbeigeführt wird, dass für jeden Datentyp, der direkt von einem Datentyp aus einem anderen Namensraum vererbt ist (die jeweilige direkte Vererbung ist durch jeweils einen nichtgestrichelten rückwärts gerichteten Pfeil dargestellt), die Vererbungsinformationen BT1..BT3 gespeichert und/oder von einem ersten zu einem zweiten Gerät übertragen werden, wobei die Vererbungsinformationen BT1..BT3 eines Datentypen gemäß der gezeigten Ausführungsvariante aus einer Kennzeichnung des jeweiligen Namensraums NAMENSRAUM_ID und dem lokalen Typcode der Basistypen LBT, LBT' in den jeweiligen vererbenden Namensraum NS1, NS3 sowie NS4 bestehen.

Ausgehend von diesen strukturierten Vererbungsinformationen BT1..BT3 wird der Kern des erfindungsgemäßen Verfahrens deutlich, der darin liegt, dass statt des gesamten Vererbungsbaums, der sich aus der Vereinigungsmenge der Vererbungsverhältnisse aller Namensräume ergibt, lediglich die Namensräume von Startbasistypen OBT, der zu adressierenden Typen und die Vererbungsbeziehung BT1..BT3 zwischen demjenigen Namensraum (erbender Namensraum), der die adressierbaren Typen enthält, und demjenigen Namensraum (vererbender Namensraum), der den jeweiligen Startbasistypen OBT enthält, gespeichert und für die Bestimmung der adressierbaren Datentypen TM verwendet werden.

Die Vererbungsinformation (-beziehung) BT1..BT3 identifiziert somit im Grunde Basistypen von Kopftypen eines Namensraums, wobei man unter Kopftypen diejenigen Datentypen versteht, die direkt auf einem Basistyp aus einem vererbenden Namensraum basieren und wobei als Basistypen hierbei diejenigen Datentypen LBT eines vererbenden Namensraums NS1, NS3 sowie NS4 verstanden werden, die
a) direkter Basistyp (LBT) eines Kopftypen (HT), oder
b) direkter Basistyp (LBT') eines Kopftypen (HT') eines etwaigen weiteren sich in der Vererbungshierarchie befindenden - gemäß dem Ausführungsbeispiel dritten- Namensraums NS3 sind, wobei der Kopftyp HT' direkter oder indirekter Basistyp des Kopftypen HT im Namensraum des abgeleiteten Typen ist.

Ausgehend von dieser erfindungsgemäßen Strukturierung werden nun bei dem erfindungsgemäßen Verfahren ausgehend von einem Startbasistyp OBT in einem ersten Namensraum NS1 die adressierbaren Datentypen TM in einem zweiten Namensraum NS2 identifiziert, indem
a) Kopftypen HT in dem zweiten Namensraum identifiziert werden, zu denen Typen LBT und LBT' aus dem ersten Namensraum als Vererbungsinformation BT1..BT3 abgelegt sind, und
b) der Typ OBT ein Basistyp der Typen LBT bzw. LBT' ist.

Somit lässt sich lediglich zusammen mit dem Vererbungsbaum des erbenden Namensraums ausgehend von einem als Basistyp festzulegenden Datentyps des vererbenden Namensraums NS1 eine Menge der adressierbare Typen bestimmen, ohne Kenntnis aller im erbenden Namensraum importierter Namensräume haben zu müssen. Hieraus ergibt sich eine enorme Aufwandsminimierung, die sich in einer Einsparung von Rechenleistung und Speicherplatzbedarf sowie einer beschleunigten Codierung bzw. Decodierung niederschlägt.

## Patentansprüche

1. Verfahren zur Codierung eines strukturierten, insbesondere XML-basierten Dokuments, bei dem eine Vielzahl von Codes mittels eines oder mehrerer Namensräume (NS1..NS4) erzeugt und für mittels Namensräumen (NS1..NS4) definierten Typen vergeben werden, bei dem zu jedem Namensraum eine Zuordnung zu weiteren Namensräumen derart gebildet wird, dass zumindest eine Zuordnungsinformation (NAMENSRAUM_ID, TYPECODE) dergestalt erzeugt wird, dass zumindest eine Vererbungsbeziehung (BT1..BT3) zwischen einem erbenden Namensraum (NS2) und vererbenden Namensräumen (NS1, NS3, NS4) beschrieben ist,
**dadurch gekennzeichnet,**
**dass** die Zuordnungsinformation des erbenden Namensraums (NS2) aus einer Liste von Codes (TYPECODES) der Basistypen (LBT, LBT') von Kopftypen (HT) des erbenden Namensraums gebildet wird, wobei Basistypen (LBT, LBT') Typen sind, von denen direkt der Kopftyp (HT) entstammt (LBT) oder von denen ein Kopftyp (HT') entstammt, der wiederum Basistyp eines Kopftyps (HT) des erbenden Raums (NS2) ist (LBT').

2. Verfahren nach Anspruch 1,
**dadurch gekennzeichnet,**
**dass** eine Teilmenge (TM) bestehend aus adressierbaren Typen eines Namensraums (NS2) ausgehend von einem Startbasistypen (OBT) auf Grundlage einer Vererbungsbeziehung (BT1..BT3) zwischen den Namensräumen (NS1..NS4) sowie der Vererbungsbeziehungen in einem Namensraum des Basistypen (OBT) und der Vererbungsbeziehungen in dem Namensraum der Teilmenge (TM) ermittelt wird.

3. Verfahren nach Anspruch 2,
**dadurch gekennzeichnet,**
**dass** die adressierbare Teilmenge(TM) ausgehend von einem Startbasistyp (OBT) durch Bestimmung der Basistypen (LBT, LBT') des vererbenden Namensraums (NS1) ermittelt wird.

4. Verfahren nach Anspruch 3,
**dadurch gekennzeichnet,**
**dass**
a) ausgehend von dem Startbasistyp (OBT) zur Ermittlung der Teilmenge (TM) Kopftypen (HT) im erbenden Namensraum (NS2) ermittelt werden, zu denen Basistypen (LBT, LBT') aus dem vererbenden Namensraum (NS1) durch die Zuordnungsinformation (NAMENSRAUM_ID, TYPECODE) identifiziert sind,
b) der Startbasistyp (OBT) ein Basistyp der Basistypen (LBT, LBT') des vererbenden Namensraums (NS1) ist.

5. Verfahren nach einem der vorhergehenden Ansprüche,
**dadurch gekennzeichnet,**
**dass** die den erbenden Namensräumen (NS2) zugeordnete Zuordnungsinformation (NAMENSRAUM_ID, TYPECODE) gemeinsam mit dem jeweiligen Namensraum (NS2) in einem die Codierung und/oder Decodierung vornehmenden ersten Gerät gespeichert wird.

6. Verfahren nach Anspruch 5,
**dadurch gekennzeichnet,**
**dass** die den erbenden Namensräumen (NS2) zugeordnete Zuordnungsinformation (NAMENSRAUM_ID, TYPECODE) in einem zweiten Gerät erzeugt und gemeinsam dem jeweiligen Namensraum (NS1 NS2) in einem die Codierung und/oder Decodierung vornehmenden ersten Gerät übermittelt wird.

7. Verfahren nach einem der vorhergehenden Ansprüche,
**dadurch gekennzeichnet,**
**dass** für ein Schema und/oder einen Namensraum und/oder für eine Gruppe von Schemas und/oder Namensräumen jeweils separate, von anderen Schemas und/oder Namensräumen unabhängige Codes für die mittels in den Schemas und/oder Namensräumen und/oder in den Gruppen von Schemas und/oder Namensräumen definierten und/oder deklarierten Elemente vergeben werden.

8. Verfahren nach Anspruch 7, bei dem zur Identifikation des Schemas und/oder des Namensraums und/oder der Gruppe von Schemas und/oder Namensräumen die separaten Codes in entsprechende Adressbereiche unterteilt sind.

9. Verfahren nach einem der Ansprüche 7 bis 8, bei dem die separaten Codes jeweils einen lokalen Code bezüglich des Schemas und/oder des Namensraums und/oder bezüglich der Gruppe von Schemas und/oder Namensräumen und einen Identifikationscode zur Identifikation des Schemas und/oder des Namensraums und/oder der Gruppe von Schemas und/oder Namensräumen umfassen.

10. Verfahren nach einem der Ansprüche 7 bis 9,
bei dem separate Codes für globale Elemente und/oder SubstitutionGroups und/oder Datentypen erzeugt werden.

11. Verfahren nach Anspruch 10,bei dem separate Codes für Datentypen TypeCodes derart erzeugt werden, dass innerhalb des Vererbungsbaums eines Namensraums, der zu einem ersten Datentyp in demselben Namensraum benachbarten Datentyp einen Codeabstand zu dem ersten Datentyp hat, welcher der Anzahl der in diesem Namensraum von dem ersten Datentyp abgeleiteten Datentypen entspricht.

12. Verfahren nach einem der Ansprüche 7 bis 11, bei dem die separaten Codes innerhalb eines gegebenen Namensraums gemäß einem Verfahren vergeben werden, das folgende Schritte umfasst:
- in einem ersten Schritt werden alle Datentypen eines Namensraums, die von Datentypen anderer Namensräume vererbt worden sind, in der im MPEG-7 Standard definierten Reihenfolge der globalen TypeCodes der jeweiligen Basisdatentypen in einer Liste sortiert, wobei die Basisdatentypen die Datentypen in anderen Namensräumen sind, von denen die sortierten Datentypen vererbt worden sind;
- in einem zweiten Schritt werden jeweils diejenigen Datentypen eines Namensraums, die von einem bestimmten Basisdatentypen eines bestimmten anderen Namensraums vererbt worden sind, lexikographisch sortiert;
- in einem dritten Schritt werden alle Datentypen eines Namensraums, die nicht von einem Datentypen eines anderen Namensraums vererbt worden sind, entsprechend der im MPEG-7 Standard definierten Reihenfolge in die bestehende Liste von Datentypen einsortiert;
- in einem vierten Schritt werden die separaten Codes in der Reihenfolge der Liste an die Datentypen des Namensraums vergeben.

13. Codiervorrichtung, welche derart ausgestaltet ist, dass ein Codierverfahren nach einem der Ansprüche 1 bis 12 durchführbar ist.

## Claims

1. Method for coding a structured, in particular XML-based, document, with which a plurality of codes are generated by means of one or more name spaces (NS1 .. NS4) and allocated for types defined by means of name spaces (NS1 .. NS4), wherein for each name space an assignment to further name spaces is formed such that at least one assignment information item (NAMESPACE_ID, TYPECODE) is generated such that at least one inheritance relationship (BT1 .. BT3) is described between an inheriting name space (NS2) and bequeathing name spaces (NS1, NS3, NS4)
**characterised in that**
the assignment information of the inheriting name space (NS2) is formed from a list of codes (TYPECODES) of the basic types (LBT, LBT') of header types (HT) of the inheriting name space, with basic types (LBT, LBT') being types, from which the header type (HT) originates directly (LBT) or from which a header type (HT') originates, which in turn is the basic type of a header type (HT) of the inheriting space (NS2) (LBT').

2. Method according to claim 1,
**characterised in that**
a subset (TM) comprising addressable types of a name space (NS2) is determined based on an initial basic type (OBT) on the basis of an inheritance relationship (BT1 .. BT3) between the name spaces (NS1 .. NS4) and the inheritance relationships in a name space of the basic type (OBT) and the inheritance relationships in the name space of the subset (TM).

3. Method according to claim 2,
**characterised in that**
the addressable subset (TM) is determined based on an initial basic type (OBT) by establishing the basic types (LBT, LBT') of the bequeathing name space (NS1).

4. Method according to claim 3,
**characterised in that**
a) based on the initial basic type (OBT) for determining the subset (TM), header types (HT) are determined in the inheriting name space (NS2), for which basic types (LBT, LBT') are identified from the bequeathing name space (NS1) by means of the assignment information (NAMESPACE_ID, TYPECODE),
b) the initial basic type (OBT) is a basic type of the basic types (LBT, LBT') of the bequeathing name space (NS1).

5. Method according to one of the preceding claims,
**characterised in that**
the assignment information (NAMESPACE_ID, TYPECODE) assigned to the inheriting name spaces (NS2) is stored together with the respective name space (NS2) in a first device carrying out the coding and/or decoding.

6. Method according to claim 5,
**characterised in that**
the assignment information (NAMESPACE_ID, TYPECODE) assigned to the inheriting name spaces (NS2) is generated in a second device and transmitted together with the respective name space (NS1, NS2) in a first device carrying out the coding and/or decoding.

7. Method according to one of the preceding claims,
**characterised in that**
respectively separate codes, which are independent of other schemas and/or name spaces, for the elements defined and/or declared in the schemas and/or name spaces and/or in the groups of schemas and/or name spaces, are allocated for a schema and/or a name space and/or for a group of schemas and/or name spaces.

8. Method according to claim 7, with which, to identify the schema and/or name space and/or the group of schemas and/or name spaces the separate codes are sub-divided into corresponding address areas.

9. Method according to one of claims 7 to 8, with which the separate codes respectively comprise a local code relating to the schema and/or the name space and/or relating to the group of schemas and/or name spaces and an identification code to identify the schema and/or name space and/or the group of schemas and/or name spaces.

10. Method according to one of claims 7 to 9, with which separate codes are generated for global elements and/or substitution groups and/or data types.

11. Method according to claim 10, with which separate codes are generated for TypeCodes data types such that within the inheritance tree of a name space the data type adjacent to a first data type in the same name space is at a code interval in respect of the first data type, said code interval corresponding to the number of data types derived from the first data type in this name space.

12. Method according to one of claims 7 to 11, with which the separate codes within a given name space are allocated according to a method, which comprises the following steps:
- in a first step all data types of a name space, which were bequeathed from data types of other name spaces, are sorted in a list in the sequence of global TypeCodes of the respective basic data types as defined in the MPEG-7 standard, the basic data types being the data types in other name spaces, from which the sorted data types were bequeathed;
- in a second step those data types of a name space, which were bequeathed from a specific basic data type of a specific other name space, are sorted lexicographically in each instance;
- in a third step all the data types of a name space, which were not bequeathed from a data type of another name space, are sorted according to the sequence defined in the MPEG-7 standard into the existing list of data types;
- in a fourth step the separate codes are allocated in list sequence to the data types of the name space.

13. Coding device, which is configured such that a coding method according to one of claims 1 to 12 can be implemented.

## Revendications

1. Procédé pour coder un document structuré, et plus particulièrement basé sur XML, dans lequel une pluralité de codes est générée au moyen d'un ou de plusieurs espaces de noms (NS1 ... NS4) et est attribuée pour des types définis au moyen d'espaces de noms (NS1 ... NS4), dans lequel est établie, pour chaque espace de noms, une association avec d'autres espaces de noms de manière telle qu'au moins une information d'association (NAMENSRAUM_ID, TYPECODE) est générée de manière telle qu'est décrite au moins une relation d'héritage (BT1 ... BT3) entre un espace de noms héritier (NS2) et des espaces de noms sources de l'héritage (NS1, NS3, NS4), **caractérisé en ce que** l'information d'association de l'espace de noms héritier (NS2) est formée à partir d'une liste de codes (TYPECODES) des types de base (LBT, LBT') de types d'en-tête (HT) de l'espace de noms héritier, les types de base (LBT, LBT') étant des types dont est issu directement le type d'en-tête (HT) (LBT) ou dont est issu un type d'en-tête (HT') qui est quant à lui un type de base d'un type d'en-tête (HT) de l'espace héritier (NS2) (LBT').

2. Procédé selon la revendication 1, **caractérisé en ce qu'**est déterminé un sous-ensemble (TM) composé de types adressables d'un espace de noms (NS2) à partir d'un type de base de départ (OBT) sur la base d'une relation d'héritage (BT1 ... BT3) entre les espaces de noms (NS1 ... NS4) ainsi que sur la base des relations d'héritage dans un espace de noms du type de base (OBT) et des relations d'héritage dans l'espace de noms du sous-ensemble (TM).

3. Procédé selon la revendication 2, **caractérisé en ce que** le sous-ensemble adressable (TM) est déterminé à partir d'un type de base de départ (OBT) par détermination des types de base (LBT, LBT') de l'espace de noms source de l'héritage (NS1).

4. Procédé selon la revendication 3, **caractérisé en ce que** :
a) partant du type de base de départ (OBT) pour déterminer le sous-ensemble (TM), des types d'entête (HT) sont déterminés dans l'espace de noms héritier (NS2) pour lesquels des types de base (LBT, LBT') tirés de l'espace de noms source de l'héritage (NS1) sont identifiés par l'information d'association (NAMENSRAUM_ID, TYPECODE) ;
b) le type de base de départ (OBT) est un type de base des types de base (LBT, LBT') de l'espace de noms source de l'héritage (NS1).

5. Procédé selon l'une des revendications précédentes, **caractérisé en ce que** l'information d'association (NAMENSRAUM_ID, TYPECODE) associée aux espaces de noms héritiers (NS2) est stockée conjointement avec l'espace de noms respectif (NS2) dans un premier appareil qui effectue le codage et/ou le décodage.

6. Procédé selon la revendication 5, **caractérisé en ce que** l'information d'association (NAMENSRAUM_ID, TYPECODE) associée aux espaces de noms héritiers (NS2) est générée dans un deuxième appareil et est transmise conjointement à l'espace de noms respectif (NS1, NS2) dans un premier appareil qui effectue le codage et/ou le décodage.

7. Procédé selon l'une des revendications précédentes, **caractérisé en ce que** sont respectivement attribués, pour un schéma et/ou un espace de noms et/ou pour un groupe de schémas et/ou d'espaces de noms, des codes séparés, indépendants d'autres schémas et/ou espaces de noms, pour les éléments définis et/ou déclarés au moyen de dans les schémas et/ou espaces de noms et/ou dans les groupes de schémas et/ou d'espaces de noms.

8. Procédé selon la revendication 7, dans lequel les codes séparés sont subdivisés en zones d'adresses correspondantes pour identifier le schéma et/ou l'espace de noms et/ou le groupe de schémas et/ou d'espaces de noms.

9. Procédé selon l'une des revendications 7 ou 8, dans lequel les codes séparés incluent respectivement un code local relatif au schéma et/ou à l'espace de noms et/ou au groupe de schémas et/ou d'espaces de noms et un code d'identification pour identifier le schéma et/ou l'espace de noms et/ou le groupe de schémas et/ou d'espaces de noms.

10. Procédé selon l'une des revendications 7 à 9, dans lequel sont générés des codes séparés sont générés pour des éléments globaux et/ou des groupes de substitution et/ou des types de données.

11. Procédé selon la revendication 10, dans lequel sont générés des codes séparés pour des types de données TypeCodes de manière telle que, au sein de l'arborescence d'héritage d'un espace de noms, le type de données voisin d'un premier type de données dans le même espace de noms a une distance de code par rapport au premier type de données qui correspond au nombre des types de données dérivés du premier type de données dans cet espace de noms.

12. Procédé selon l'une des revendications 7 à 11, dans lequel les codes séparés sont attribués, au sein d'un espace de noms donné, selon un procédé qui comprend les étapes suivantes :
- dans une première étape, tous les types de données d'un espace de noms qui ont été transmis par héritage par des types de données d'autres espaces de noms sont triés dans une liste dans l'ordre des TypeCodes globaux des types de données de base respectifs défini dans le standard MPEG-7, les types de données de base étant les types de données dans d'autres espaces de noms dont les types de données triés ont été transmis par héritage ;
- dans une deuxième étape, respectivement les types de données d'un espace de données qui ont été transmis par héritage par un type de données de base déterminé d'un autre espace de noms déterminé sont triés lexicographiquement ;
- dans une troisième étape, tous les types de données d' un espace de données qui n'ont pas été transmis par héritage par un type de données d'un autre espace de noms sont classés dans la liste existante de types de données conformément à l'ordre défini dans le standard MPEG-7 ;
- dans une quatrième étape, les codes séparés sont attribués aux types de données de l'espace de noms dans l'ordre de la liste.

13. Dispositif de codage réalisé de manière telle qu'il est possible d'exécuter un procédé de codage selon l'une des revendications 1 à 12.
